# EUROPEAN PATENT APPLICATION

(11) **EP 1 680 996 A1**
(43) Date of publication of application: **19.07.2006**
(21) Application number: 06100291.1
(22) Date of filing: 12.01.2006
(51) Int. Cl.: A47J 37/06

(54) **Cooking apparatus**

(30) Priority: 13.01.2005 KR 3309
(71) Applicant: Samsung Electronics Co., Ltd., Suwon-si, Gyeonggi-Do (KR)
(72) Inventor: Kang,, Han-seong, Gyenoggi-do (KR); Kwon, Yong-hyun, Gyeonggi-do (KR); Kim, Chul, Gyeonggi-do (KR); Sung, Han-jun Byeokjeokgol Apt. 909-202, Gyeonggi-do, Suwon-si (KR); Jang, Seong-deog, Gyeonggi-do (KR); Han, Dae-sung, Gyeonggi-do (KR); Lee, Tae-uk, Suwon-si Gyeonggi-do (KR)
(74) Representative: Grey, Ian Michael

(57) **Abstract**

A cooking apparatus having a grill part to cook food thereon, and electric heaters as a heating source to cook food. The apparatus includes a grill reflecting member for reflecting heat from the electric heaters to the grill part, having an oil guiding hole through which oil coming out of food being cooked may pass. An oil collector is disposed below the grill reflection member for collecting the oil that has passed through the oil guiding hole.

## Description

The present invention relates to a cooking apparatus comprising a housing, a grill supported on the housing, at least one heating element provided within the housing, and a heat reflecting member being disposed within the housing below the grill to reflect heat from the at least one heating element towards the grill,

The term "grilling" refers to a method of broiling foods on a gridiron or directly over a heat source and known household grilling appliances may use electricity or gas.

An electric grill device cooks food by using electric heaters as the heating source. A main body of the electric grill device includes a grill part for directly contacting and cooking food and the heat generated by the electric heaters is reflected to the grill part by a grill reflecting member.

Such a conventional grill device is disclosed in Korean Patent First Publication No. 2004-39155 and includes a box-shaped main body; a plurality of heating members provided inside the main body; a grill member disposed at an upper part of the main body and a heat reflection member disposed in a lower part of the main body, for transmitting radiant heat from the heating member to the grill member.

In the conventional cooking device, if oil and other residues generated from food during cooking collect on the heat reflection member, the heat reflecting efficiency of the heat reflection member is reduced and so the cooking efficiency is correspondingly diminished.

Therefore, it is an object of the present invention to provide a cooking apparatus that substantially alleviates or overcomes the problems mentioned above.

Accordingly, the present invention is characterised in that an oil collector is provided below the heat reflecting member, the heat reflecting member being configured such that oil and other residues falling thereon from the food being cooked can run off the heat reflecting member into the oil collector below.

In a preferred embodiment, the heat reflecting member includes at least one aperture through which oil and other residues from the food can pass into the oil collector.

Preferably, the heat reflecting member is generally 'W'-shaped in cross-section.

The present invention also provides a cooking apparatus having a grill part to cook food thereon, and electric heaters as heating source to cook food, including: a grill reflecting member reflecting heat generated from the electric heaters to the grill part, having an oil guiding hole which guides oil coming out of food being cooked; and an oil collector disposed in a lower side of the grill reflection member, collecting the oil passing through the oil guiding hole downward.

Preferably, the oil guiding hole is formed on both side areas of the grill reflecting member.

In a preferred embodiment, the cooking apparatus further includes a grill housing coupled with the grill part on an upper side of the grill housing, being formed in an accommodating space inside thereof and where the oil collector is received in the grill housing to be disposed in the lower part of the grill reflecting member.

A preferred embodiment of the present invention will now be described, by way of example only, with reference to the accompanying drawings, in which:
Figure 1 is an exploded perspective view illustrating a cooking apparatus according to the present invention;
Figure 2 is an exploded perspective view illustrating a grill part and a grill housing of the cooking apparatus of Figure 1; and
Figure 3 is a sectional view of the cooking apparatus taken along line III-III of Figure 2 to illustrate that the assembly of the grill part and the grill housing.

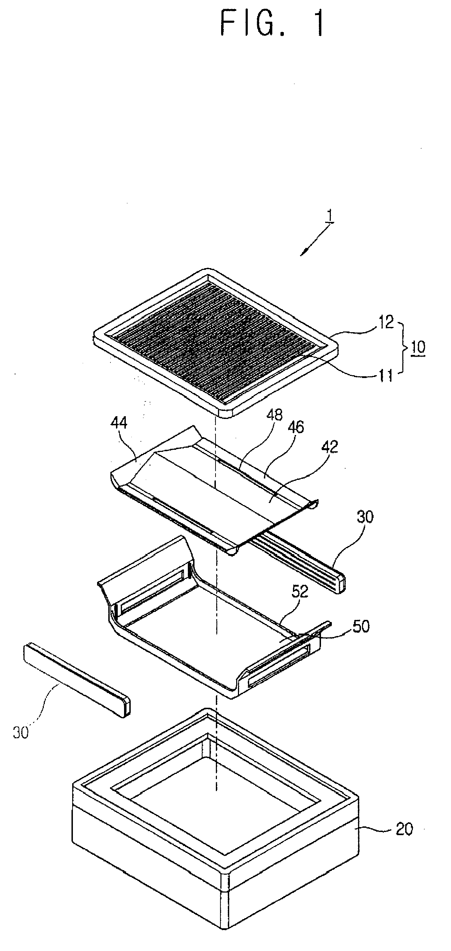

As illustrated in Figure 1, a cooking apparatus 1 according to the present invention includes a grill part 10 on which food is cooked and a grill housing 20, an upper part of which is coupled to a lower part of the grill part 10. In use, the grill part 10 directly contacts and cooks the food and includes a plurality of grill bars 11 disposed at predetermined intervals so as to safely seat food thereon, and a support frame 12 supporting the plurality of grill bars 11 around its edge.

The grill housing 20 includes an upper opening over which the grill part 10 is supported, inside of which a heating space is formed. Inside of the grill housing 20 heating space is a pair of electric heaters 30, a grill reflecting member 40 for reflecting heat from the electric heaters 30, and an oil collector 50 for collecting oil below the grill reflecting member 40.

The electric heaters 30 are installed facing each other on opposite side walls inside the grill housing 20 below the grill part 10. The heat generated in the electric heaters 30 is transmitted to the grill part 10 by the grill reflecting member 40.

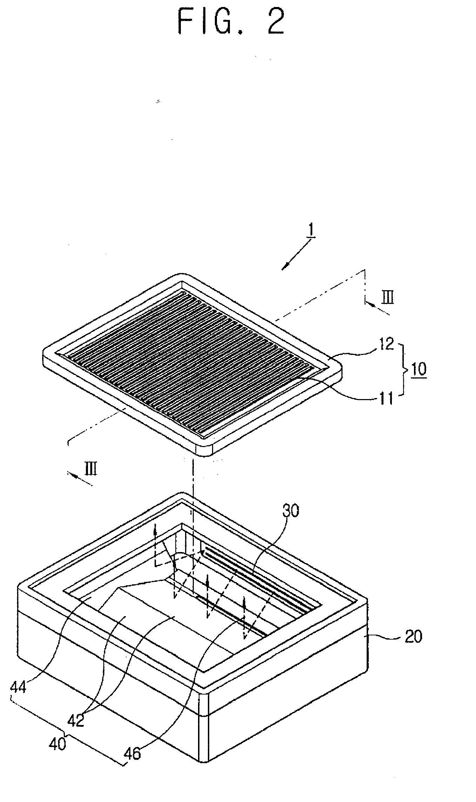

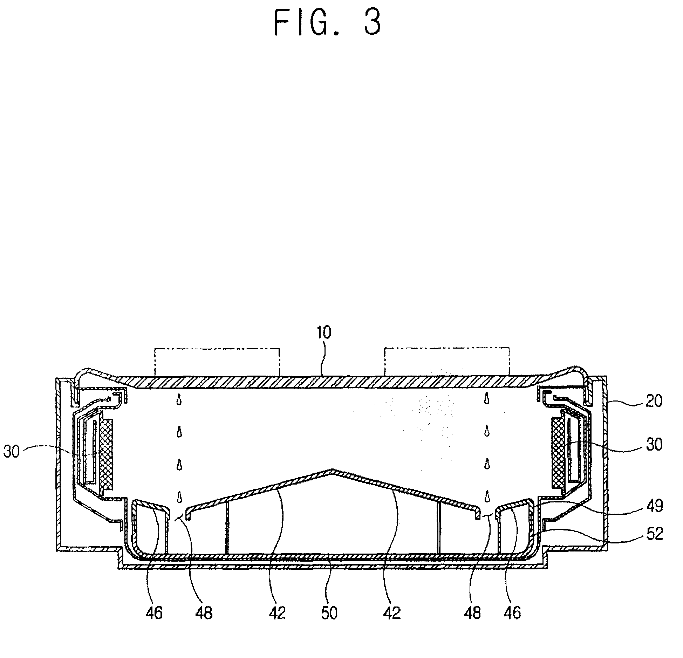

As illustrated in Figures 2 and 3, the grill reflecting member 40 has an approximately w-shaped section. The grill reflecting member 40 may be made of a metallic material having a good thermal reflectivity and conductivity so as to efficiently reflect the heat generated from the electric heaters 30 and then transmit it to the grill part 10.

The grill reflecting member 40 has a pair of first reflection faces 42 interconnected in the centre of the grill reflecting member 40, auxiliary reflection faces 46, one formed adjacent to each first reflection face 42 on opposite sides of the grill reflecting member 40 and a second reflection face 44 extended from the ends of the first reflection faces 42 and the auxiliary reflection faces 46.

The first reflection faces 42 are positioned in front of the electric heaters 30 and are angled so as to reflect the heat generated from the electric heaters 30 to the grill part 10.

The auxiliary reflection faces 46 are adjacent to the electric heaters 30 and as such, they become hot while the cooking apparatus 1 is in operation. Downwardly-extending plate parts 49 are formed on the ends of the auxiliary reflection faces 46 which are coupled to the oil collector 50.

An oil guiding hole 48 is formed between each auxiliary reflection face 46 and the adjacent first reflection face 42, to allow the oil coming out of food being cooked to pass through the grill reflecting member 40 into the oil collector 50 positioned therebelow.

The second reflection face 44 is disposed laterally to the heat emitting direction of the electric heaters 30 and is smoothly curved so as to allow the heat generated from the electric heaters 30 to be reflected to the grill part 10.

As illustrated in Figure 3, the oil collector 50 is coupled to the underside of the grill reflection member 40 which has an approximately W-shaped cross section. The oil collector 50 and grill reflection member 40 together define an accommodating space which receives the oil or other residues from the food being cooked. Vertically-extending side wall parts 52 of the oil collector 50 are coupled with the downwardly-extending side plate parts 49 of the grill reflection member 40.

Hereinbelow, a cooking process of the present invention will be described.

As illustrated in Figure 3, the electric heaters 30 and the grill reflection member 40 coupled with the oil collector 50 are accommodated inside the grill housing 20 and the grill part 10 is disposed above the grill housing 20. In use, the heat generated from the electric heaters 30 is transmitted to the grill part 10 by reflection in the grill reflection member 40. As the food is cooked on the grill part 10, the oil coming out from food falls down onto the grill reflection member 40 and then is guided to the oil collector 50 below the grill reflection member 40 through the oil guiding hole 48. Therefore, oil and other residues from the food does not accumulate on the grill reflection member 40. This means the surface of the grill reflection member 40 remains free of cooking residues and consequently, its reflectivity remains high and so its heat reflecting efficiency remains high, thereby resulting in the cooking efficiency of the cooking apparatus remaining high and not deteriorating over the course of the cooking process.

A further benefit of this is that since the oil and other residues do not collect on the grill reflection member 40, they do not burn under the heat from the electric heaters 30, thereby preventing smoke and fumes from being generated and also making subsequent cleaning of the grill reflection member 40 much simpler and easier.

Although an embodiment of the present invention has been shown and described, it will be appreciated by those skilled in the art that changes may be made in these embodiments without departing from the principles of the invention, the scope of which is defined in the appended claims hereafter.

## Claims

1. A cooking apparatus comprising a housing, a grill supported on the housing, at least one heating element provided within the housing, and a heat reflecting member being disposed within the housing below the grill to reflect heat from the at least one heating element towards the grill, **characterised in that** an oil collector is provided below the heat reflecting member, the heat reflecting member being configured such that oil and other residues falling thereon from the food being cooked can run off the heat reflecting member into the oil collector below.

2. A cooking apparatus according to claim 1 wherein the heat reflecting member includes at least one aperture through which oil and other residues from the food can pass into the oil collector.

3. A cooking apparatus according to claim 2 wherein the heat reflecting member is generally 'W'-shaped in cross-section.

4. A cooking apparatus having a grill part to cook food thereon, and electric heaters as a heating source to cook food, comprising a grill reflecting member reflecting a heat generated from the electric heaters to the grill part, having an oil guiding hole which guides oil coming out of food being cooked, and an oil collector disposed on a lower side of the grill reflection member, collecting the oil passing through the oil guiding hole downward.

5. The cooking apparatus according to claim 4 wherein the oil guiding hole is formed on both side areas of the grill reflecting member.

6. The cooking apparatus according to claim 5 further comprising a grill housing coupled to the grill part on a upper side of the grill housing, being formed in an accommodating space inside thereof wherein the oil collector is received in the grill housing to be disposed in the lower part of the grill reflecting member.

7. A cooking apparatus, comprising a grill part on which food is cooked, a grill housing coupled to a lower part of the grill part, a pair of electric heaters disposed on the inside of the grill housing, a grill reflecting member to reflect heat from the electric heaters and an oil collector for collecting oil in a lower part of the grill reflecting member.

8. The cooking apparatus of claim 7 wherein the electric heaters are installed oppositely to each other inside the grill housing 20 so that they are disposed in the lower part of the grill part.

9. The cooking apparatus of claim 7 wherein the grill reflecting member has a w-shaped cross section.

10. The cooking apparatus of claim 7 wherein the grill reflecting member is made of metallic materials.

11. The cooking apparatus of claim 7 wherein the grill reflecting member comprises a pair of first reflection faces interconnected at the centre of the grill reflecting member, a pair of auxiliary reflection faces formed opposite to the first reflection faces and a pair of second reflection faces extended from the ends of the first reflection faces and the auxiliary reflection faces wherein the first reflection faces are disposed in the direction of the heat emitted from the electric heaters.

12. The cooking apparatus of claim 11 wherein the auxiliary reflection faces are adjacent to the electric heaters.

13. The cooking apparatus of claim 11 further comprising bent side plate parts formed on the ends of the auxiliary reflection faces wherein the bent side plate parts are coupled to the oil collector.

14. The cooking apparatus of claim 11 further comprising at least one oil guiding hole formed between the auxiliary reflection faces and the first reflection faces wherein the oil guiding hole leads to the oil collector.
